# EUROPEAN PATENT SPECIFICATION

(11) **EP 0 380 162 B1**
(45) Date of publication and mention of the grant of the patent: **12.04.1995**
(21) Application number: 90200119.7
(22) Date of filing: 16.01.1990
(51) Int. Cl.: C08G 67/02, C08F 4/80

(54) **Catalyst compositions**
Katalysator-Zusammensetzungen
Compositions de catalyseurs

(30) Priority: 26.01.1989 NL 8900184
(43) Date of publication of application: 01.08.1990
(73) Proprietor: SHELL INTERNATIONALE RESEARCH MAATSCHAPPIJ B.V., 2596 HR Den Haag (NL)
(72) Inventor: van Leeuwen, Petrus Wilhelmus Nicolaas Maria, NL-1031 CM Amsterdam (NL); Roobeek, Cornelis Franciscus, NL-1031 CM Amsterdam (NL)

(56) References cited:
- EP-A- 0 222 454
- EP-A- 0 246 683

## Description

The invention relates to catalyst compositions based upon a complex of palladium compound and a phosphorus bidentate ligand which can be suitably used as catalysts in the preparation of polymers of carbon monoxide with one or more olefinically unsaturated compounds.

It is known that linear polymers of carbon monoxide with one or more olefinically unsaturated compounds, in which the units originating in carbon monoxide on the one hand, and the units originating in the applied olefinically unsaturated compounds on the other hand, occur in alternating order, can be prepared by contacting the monomers with a catalyst composition on the basis of a complex of a palladium dihalide and a phosphorus bidentate ligand of the general formula R¹R²P-R-PR³R⁴, in which general formula, R¹, R², R³ and R⁴ are identical or different optionally polar-substituted hydrocarbyl groups and R is a bivalent organic bridging group containing at least two carbon atoms in the bridge.

In an investigation carried out by the Applicant into these catalyst compositions, it was found that their activity can be much enhanced by replacing one of the palladium-linked halogen atoms in the palladium dihalide/phosphorus bidentate ligand complex with a hydrocarbon group. The Applicant has also done research into the said replacement of one of the palladium-linked halogen atoms with a hydrocarbon group. Initially, the results were disappointing. All attempts at realising the desired replacement by reacting the palladium dihalide-containing complexes with a hydrocarbylmagnesium halide, a hydrocarbyllithium compound or a di(hydrocarbyl)zinc compound were seen to result in the replacement of both halogen atoms with hydrocarbon groups. Further research has led to a process which offers the possibility of replacing only one of the palladium-linked halogen atoms in the aforementioned palladium dihalide/phosphorus bidentate ligand complexed with a hydrocarbon group. It has further been found that not only can this process be employed for replacing one of the palladium-linked halogen atoms present in a palladium dihalide/phosphorus bidentate ligand complex in which the phosphorus bidentate ligand satisfies the general formula given hereinbefore, but that it can be applied more generally to palladium dihalide/bidentate ligand complexes which include a bidentate ligand containing the configuration M-R⁵-M, in which R⁵ represents a bridging group and the moieties M are chosen from phosphorus, sulphur, nitrogen, arsenic, antimony and C=C. When these bidentate ligands are complexed with a palladium dihalide, the bond of the bidentate ligand with the palladium atom is formed via the two groups M present in the bidentate ligand. The found process for replacing one of the halogen atoms present in a palladium dihalide/phosphorus bidentate ligand complex involves the reaction of the complex with a tin compound containing four tin-linked groups, three of which are identical or different hydrocarbyl groups, whilst the fourth group is either also a hydrocarbyl group or a hydrogen or a halogen atom. Application of this process to a palladium dihalide/phosphorus bidentate ligand complex in which the phosphorus bidentate ligand has the general formula R¹R²P-R-PR³R⁴ leads to a hydrocarbylpalladium halide/phosphorus bidentate ligand complex which is suitable for use in the present catalyst compositions. Application of the process to a palladium dihalide/bidentate ligand complex which contains another bidentate ligand leads to a hydrocarbylpalladium halide/bidentate ligand complex from which it is simple to prepare the desired hydrocarbylpalladium halide/phosphorus bidentate ligand complex by reaction with a compound of the general formula R¹R²P-R-PR³R⁴.

Catalyst compositions which comprise a complex of a hydrocarbylpalladium halide and a phosphorus bidentate ligand of the general formula R¹R²P-R-PR³R⁴ are novel. Novel is also a process for the preparation of a hydrocarbylpalladium halide/bidentate ligand complex by reacting a complex of a palladium dihalide and a bidentate ligand containing the configuration M-R⁵-M, with a tin compound as described hereinbefore, followed, if the complex obtained contains a bidentate ligand which does not satisfy the general formula R¹R²P-R-PR³R⁴, by further conversion of that complex by reacting it with a phosphorus bidentate ligand of the general formula R¹R²P-R-PR³R⁴.

The present patent application therefore relates to novel catalyst compositions on the basis of a complex of a hydrocarbylpalladium halide and a phosphorus bidentate ligand of the general formula R¹R²P-R-PR³R⁴. Further, the patent application relates to the use of these catalyst compositions in the preparation of polymers of carbon monoxide with one or more olefinically unsaturated compounds. Finally, the patent application relates to a process for the preparation of a complex of a hydrocarbylpalladium halide with a bidentate ligand containing the configuration M-R⁵-M, by reacting a complex of a palladium dihalide with the corresponding bidentate ligand with a tin compound containing four tin-linked groups, of which three are identical or different hydrocarbyl groups whilst the fourth group is either also a hydrocarbyl group or a hydrogen or a halogen atom, followed, if the complex obtained contains a bidentate ligand which does not satisfy the general formula R¹R²P-R-PR³R⁴, by a further conversion of the complex thus obtained by reacting it with a phosphorus bidentate ligand of the general formula R¹R²P-R-PR³R⁴.

In the phosphorus bidentate ligands of the general formula R¹R²P-R-PR³R⁴, groups R¹, R², R³ and R⁴ are preferably identical. Very suitable for the present purpose are phosphorus bidentate ligands in which the groups R¹, R², R³ and R⁴ are unsubstituted phenyl groups and phosphorus bidentate ligands in which the groups R¹, R², R³ and R⁴ are phenyl groups containing one or more alkoxy groups at least one of which is situated in a position ortho in respect to the phosphorus atom to which the phenyl group is linked. The bridging group R present in the phosphorus bidentate ligands preferably contains three carbon atoms in the bridge. Examples of suitable bridging groups R are the -CH₂-CH₂-CH₂- group, the -CH₂-C(CH₃)₂-CH₂- group and the -CH₂-Si(CH₃)₂-CH₂- group. The hydrocarbylpalladium halide present in the complex is preferably methylpalladium chloride.

As stated hereinbefore, the preparation of complexes of a hydrocarbylpalladium halide with a bidentate ligand containing the configuration M-R⁵-M is carried out by reacting a complex of a palladium dihalide with the relevant bidentate ligand with a tin compound as described hereinbefore. If the starting complex is a complex in which the bidentate ligand satisfies the general formula R¹R²P-R-PR³R⁴, the product is a complex that can be suitably taken up in the catalyst compositions of the invention. If the starting complex is a complex which contains another bidentate ligand, the product is a complex from which a complex that can be suitably taken up in the catalyst compositions of the invention can be prepared by reacting it with a bidentate ligand of the general formula R¹R²P-R-PR³R⁴. As examples of other bidentate ligands which may occur complexed with a palladium dihalide in the compounds that are used as starting material for the process may be mentioned bidentate ligands in which M is nitrogen, such as 2,2′-bipyridine and 1,10-phenanthroline, bidentate ligands in which M is phosphorus, such as bis(diphenylphosphino) methane, bidentate ligands in which M is sulphur, such as 1,3-bis(phenylthio) propane, bidentate ligands in which M is C=C, such as cyclooctadiene-1,5 and norbornadiene and bidentate ligands in which M is arsenic, such as 1,3-bis(diphenylarsino) propane. In the process, the starting complex is preferably one in which the palladium dihalide is palladium dichloride. In the tin compound which is employed in the process of the invention in order to replace one of the palladium-combined halogen atoms with a hydrocarbyl group, one of the tin-linked groups may be a hydrogen or a halogen atom, such as is the case in tributyl tin hydride and trimethyl tin chloride. Preference is given to tin compounds in which all four tin-linked groups are hydrocarbyl groups and in particular to such compounds in which these groups are identical. Examples of suitable tin compounds are tetramethyl tin, tetraethyl tin, tetraneopentyl tin, tetrabenzyl tin, trimethylphenyl tin and trimethylbenzyl tin. It is preferred to use a tin compound in which the four tin-linked groups are identical alkyl groups, such as tetramethyl tin.

The polymerization with the aid of the catalyst compositions of the invention is preferably performed by contacting the monomers with a solution of the catalyst composition in a diluent in which the polymers are insoluble. Very suitable diluents are lower alcohols, such as methanol. The polymerization may be carried out in the gaseous phase, if desired. Olefinically unsaturated compounds that can be suitably polymerized with carbon monoxide with the aid of the catalyst compositions of the invention are compounds consisting exclusively of carbon and hydrogen as well as compounds which, in addition to carbon and hydrogen, contain one or more hetero-atoms. The catalyst compositions of the invention are preferably applied for the preparation of polymers of carbon monoxide with one or more olefinically unsaturated hydrocarbons. Examples of suitable hydrocarbon monomers are ethene and other alpha-olefins, such as propene, butene-1, hexene-1 and octene-1. The catalyst compositions of the invention are particularly suitable for application in the preparation of copolymers of carbon monoxide with ethene and for the preparation of terpolymers of carbon monoxide with ethene and another alpha-olefin, in particular propene.

The quantity of catalyst solution employed in the preparation of the polymers may vary within wide limits. The quantity of catalyst used per mol of olefinically unsaturated compound to be polymerized preferably contains from 10⁻⁷ to 10⁻³ and in particular from 10⁻⁶ to 10⁻⁴ mol of palladium.

The preparation of the polymers is preferably carried out at a temperature below 75°C and a pressure of 2-150 bar and in particular at a temperature below 50°C and a pressure of 5-100 bar. The molar ratio of the olefinically unsaturated compounds relative to carbon monoxide in the mixture to be polymerized is preferably 10:1-1:10 and in particular 5:1-1:5.

The invention will now be illustrated with the aid of the following examples.

### Example 1

An equimolecular complex of methyl palladium chloride and 2,2-dimethyl-1,3-bis(diphenylphosphino)-2-silapropane was prepared as follows. To a suspension of 2 mmol of an equimolecular complex of palladium dichloride and 2,2-dimethyl-1,3-bis(diphenylphosphino)-2-silapropane in a mixture of 10 ml of dichloromethane and 10 ml of methanol, was added 4 mmol of tetramethyl tin. After 2 hours of stirring at room temperature, the solvents were distilled from the reaction mixture in vacuo. The residue was washed three times, each time with 5 ml of diethyl ether and then dried in vacuo at room temperature. The product was 1.15 g of an equimolecular complex of methyl palladium chloride and 2,2-dimethyl-1,3-bis(diphenylphosphino)-2-silapropane.

### Example 2

An equimolecular complex of methyl palladium chloride and 2,2-dimethyl-1,3-bis(diphenylphosphino) propane was prepared as follows. To a suspension of 2 mmol of an equimolecular complex of palladium dichloride and 2,2-dimethyl-1,3-bis(diphenylphosphino) propane in a mixture of 50 ml of dichloromethane and 50 ml of methanol, was added 4 mmol of tetramethyl tin. After refluxing for 3 hours in an argon atmosphere, the solvents were distilled from the reaction mixture in vacuo. The residue was dissolved in 5 ml of dichloromethane and 25 ml of diethyl ether was added to the solution. The solid obtained was filtered off, washed with 5 ml of diethyl ether and dried in vacuo at room temperature. The product was 0.95 g of an equimolecular complex of methyl palladium chloride and 2,2-dimethyl-1,3-bis(diphenylphosphino)propane.

### Example 3

A carbon monoxide/ethene copolymer was prepared as follows. A stirred autoclave with a capacity of 250 ml was charged with a catalyst solution comprising 100 ml methanol and 0.1 mmol of an equimolecular complex of methyl palladium chloride and 2,2-dimethyl-1,3-bis(diphenylphosphino)-2-silapropane prepared in accordance with Example 1. After any air present in the autoclave had been removed by evacuation, a 1:1 carbon monoxide/ethene mixture was blown in until a pressure of 40 bar was reached. After 1.5 hours of stirring at room temperature, polymerization was terminated by releasing the pressure. The polymer formed was filtered off, washed with methanol and dried in vacuo at room temperature. The product was 1.2 g of copolymer. The polymerization rate was 75 g copolymer/g palladium.hour.

### Example 4

A carbon monoxide/ethene copolymer was prepared substantially in the same way as in Example 3, except for the following differences
a) as palladium complex, the catalyst solution comprised an equimolecular complex of methyl palladium chloride and 2,2-dimethyl-1,3-bis(diphenylphosphino)propane prepared in accordance with Example 2, and
b) the reaction time was 4 hours instead of 1.5 hours.

The product was 1.5 g of copolymer. The polymerization rate was 35 g copolymer/g palladium.hour.

### Example 5

Example 3 was substantially repeated, the difference being that the palladium complex in the catalyst solution contained palladium dichloride instead of methyl palladium chloride. No polymerization took place.

### Example 6

Example 4 was substantially repeated, the difference being that the palladium complex in the catalyst solution contained palladium dichloride instead of methyl palladium chloride. No polymerization took place.

### Example 7

A carbon monoxide/ethene copolymer was prepared substantially in the same way as in Example 3, except for the following differences
a) as palladium complex, the catalyst solution comprised 0.1 mmol of an equimolecular complex of palladium dichloride and 1,3-bis(diphenylphosphino)propane,
b) the reaction temperature was 110°C instead of room temperature, and
c) the reaction time was 2 hours instead of 1.5 hours.

The product was 1.5 g of copolymer. The polymerization rate was 70 g copolymer/g palladium.hour.

Of Examples 1-7, Examples 1-4 are examples in accordance with the invention. In Examples 1 and 2, one of the chlorine atoms in complexes of palladium dichloride and a phosphorus bidentate ligand was replaced with a methyl group by reacting the complexes with tetramethyl tin. In Examples 3 and 4, the palladium complexes thus obtained were used as catalysts in the preparation of copolymers of carbon monoxide with ethene. Examples 5-7, in which complexes of palladium dichloride and a phosphorus bidentate ligand were used as catalysts, fall outside the scope of the invention and have been included in the patent application for comparison. The increase in activity which occurs when one of the halogen atoms in a catalyst composition on the basis of a complex of a palladium dihalide and a phosphorus bidentate ligand is replaced with a hydrocarbon group is clearly demonstrated by the comparison of the results of Examples 5 and 6 with those obtained in Examples 3 and 4, respectively (increase in polymerization rate from 0 to 75 and 35 g copolymer/g palladium.hour, respectively). Said increase in activity is also demonstrated by the comparison of the results of Examples 3 and 7. In Example 3, a polymerization rate of 75 g copolymer/g palladium.hour is obtained at room temperature by using a catalyst composition containing a complex of methyl palladium chloride with a phosphorus bidentate ligand. In Example 7, a temperature of 110°C is required to achieve a comparable (70 g/g.hour) polymerization rate by using a catalyst composition which contains a complex of a palladium dichloride instead of a complex of methyl palladium chloride.

With the aid of ¹³C-NMR analysis it was established that the carbon monoxide/ethene copolymers prepared by Examples 3, 4 and 7 had a linear structure and that the units originating in carbon monoxide on the one hand and the units originating in ethene on the other hand, occurred in alternating order.

## Claims (Claims for the following Contracting State(s): AT, BE, CH, DE, DK, FR, GB, IT, NL, SE)

1. Catalyst compositions based upon a complex of a palladium compound and a phosphorus bidentate ligand, characterized in that they are based upon a complex of a hydrocarbyl palladium halide and a phosphorus bidentate ligand of the general formula R¹R²P-R-PR³R⁴ in which R¹, R², R³ and R⁴ are identical or different optionally polar-substituted hydrocarbyl groups and R is a bivalent organic bridging group containing at least two carbon atoms in the bridge.

2. Catalyst compositions as claimed in claim 1, characterized in that in the phosphorus bidentate ligand, the groups R¹, R², R³ and R⁴ are either unsubstituted phenyl groups, or phenyl groups containing one or more alkoxy groups at least one of which occupies a position ortho in respect to the phosphorus atom to which the phenyl group is bound.

3. Catalyst compositions as claimed in claim 1 or 2, characterized in that the hydrocarbyl palladium halide is methyl palladium chloride.

4. Process for the preparation of a complex palladium compound, characterized in that a complex of a hydrocarbyl palladium halide and a bidentate ligand which includes the configuration M-R⁵-M wherein R⁵ represents a bridging group and the moieties M are chosen from phosphorus, sulphur, nitrogen, arsenic, antimony and C=C, is prepared by reacting a complex of a palladium dihalide and the corresponding bidentate ligand with a tin compound containing four tin-linked groups, three of which are identical or different hydrocarbyl groups, whilst the fourth is either also a hydrocarbyl group or a hydrogen or halogen atom.

5. Process as claimed in claim 4, characterized in that the bidentate ligand in the complex compound is a phosphorus bidentate ligand of the general formula R¹R²P-R-PR³R⁴, in which R¹, R², R³ and R⁴ are identical or different optionally polar-substituted hydrocarbyl groups and R is a bivalent organic bridging group containing at least two carbon atoms in the bridge.

6. Process as claimed in claim 4, characterized in that the bidentate ligand in the palladium dihalide/bidentate ligand complex that is reacted with the tin compound is a bidentate ligand which does not satisfy the general formula R¹R²P-R-PR³R⁴, in which R¹, R², R³ and R⁴ are identical or different optionally polar-substituted hydrocarbyl groups and R is a bivalent organic bridging group containing at least two carbon atoms in the bridge and that the hydrocarbyl palladium halide/bidentate ligand complex obtained is reacted with a phosphorus bidentate ligand of the general formula R¹R²P-R-PR³R⁴.

7. Process for the preparation of polymers, characterized in that a mixture of carbon monoxide with one or more olefinically unsaturated compounds is contacted with a catalyst composition as claimed in one or more of claims 1-3 and/or prepared according to a process as claimed in claim 5 or 6.

8. Process as claimed in claim 7, characterized in that the monomers are contacted with a solution of the catalyst composition in a diluent in which the polymers are insoluble, such as methanol.

9. Process as claimed in claim 7 or 8, characterized in that it is carried out at a temperature below 75°C, a pressure of 2-150 bar and a molar ratio of the olefinically unsaturated compounds relative to carbon monoxide in the mixture to be polymerized of 10:1-1:10 and that per mol of olefinically unsaturated compound to be polymerized, such a quantity of catalyst composition is used as to contain 10⁻⁷-10⁻³ mol of palladium.

## Claims (Claims for the following Contracting State(s): ES)

1. Process for the preparation of a complex palladium compound, characterized in that a complex of a hydrocarbyl palladium halide and a bidentate ligand which includes the configuration M-R⁵-M wherein R⁵ represents a bridging group and the moieties M are chosen from phosphorus, sulphur, nitrogen, arsenic, antimony and C=C, is prepared by reacting a complex of a palladium dihalide and the corresponding bidentate ligand with a tin compound containing four tin-linked groups, three of which are identical or different hydrocarbyl groups, whilst the fourth is either also a hydrocarbyl group or a hydrogen or halogen atom.

2. Process as claimed in claim 1, characterized in that the hydrocarbyl palladium halide is methyl palladium chloride.

3. Process as claimed in claim 1 or 2, characterized in that the bidentate ligand in the complex compound is a phosphorus bidentate ligand of the general formula R¹R²P-R-PR³R⁴, in which R¹, R², R³ and R⁴ are identical or different optionally polar-substituted hydrocarbyl groups and R is a bivalent organic bridging group containing at least two carbon atoms in the bridge.

4. Process as claimed in claim 1 or 2, characterized in that the bidentate ligand in the palladium dihalide/bidentate ligand complex that is reacted with the tin compound is a bidentate ligand which does not satisfy the general formula R¹R²P-R-PR³R⁴, in which R¹, R², R³ and R⁴ are identical or different optionally polar-substituted hydrocarbyl groups and R is a bivalent organic bridging group containing at least two carbon atoms in the bridge and that the hydrocarbyl palladium halide/bidentate ligand complex obtained is reacted with a phosphorus bidentate ligand of the general formula R¹R²P-R-PR³R⁴.

5. Process as claimed in claim 3 or 4, characterized in that in the phosphorus bidentate ligand, the groups R¹, R², R³ and R⁴ are either unsubstituted phenyl groups, or phenyl groups containing one or more alkoxy groups at least one of which occupies a position ortho in respect to the phosphorus atom to which the phenyl group is bound.

6. Process for the preparation of polymers, characterized in that a mixture of carbon monoxide with one or more olefinically unsaturated compounds is contacted with a catalyst composition prepared according to a process as claimed in any of claims 3-5.

7. Process as claimed in claim 6, characterized in that the monomers are contacted with a solution of the catalyst composition in a diluent in which the polymers are insoluble, such as methanol.

8. Process as claimed in claim 6 or 7, characterized in that it is carried out at a temperature below 75°C, a pressure of 2-150 bar and a molar ratio of the olefinically unsaturated compounds relative to carbon monoxide in the mixture to be polymerized of 10:1-1:10 and that per mol of olefinically unsaturated compound to be polymerized, such a quantity of catalyst composition is used as to contain 10⁻⁷-10⁻³ mol of palladium.

## Patentansprüche (Patentansprüche für folgende(n) Vertragsstaat(en): AT, BE, CH, DE, DK, FR, GB, IT, NL, SE)

1. Katalysatorzusammensetzungen, basierend auf einem Komplex aus einer Palladiumverbindung und einem zweizähnigen Phosphorliganden, dadurch gekennzeichnet, daß sie auf einem Komplex aus einem Kohlenwasserstoff-Palladiumhalogenid und einem zweizähnigen Phosphorliganden der allgemeinen Formel R¹R²P-R-PR³R⁴ basieren, in welcher Formel R¹, R², R³ und R⁴ identische oder unterschiedliche, gegebenenfalls polar-substituierte Kohlenwasserstoffgruppen sind und R eine zweiwertige organische Brückengruppe ist, die mindestens zwei Kohlenstoffatome in der Brücke enthält.

2. Katalysatorzusammensetzungen wie in Anspruch 1 beansprucht, dadurch gekennzeichnet, daß in dem zweizähnigen Phosphorliganden die Gruppen R¹, R², R³ und R⁴ entweder nicht-substituierte Phenylgruppen oder Phenylgruppen sind, die eine oder mehrere Alkoxygruppe(n) enthalten, von denen mindestens eine die ortho-Position in Hinblick auf das Phosphoratom, an welches die Phenylgruppe gebunden ist, einnimmt.

3. Katalysatorzusammensetzungen wie in Anspruch 1 oder 2 beansprucht, dadurch gekennzeichnet, daß das Kohlenwasserstoff-Palladiumhalogenid Methylpalladiumchlorid ist.

4. Verfahren zur Herstellung einer komplexen Palladiumverbindung, dadurch gekennzeichnet, daß ein Komplex aus einem Kohlenwasserstoff-Palladiumhalogenid und einem zweizähnigen Liganden, welcher die Konfiguration M-R⁵-M einschließt, in welcher R⁵ eine Brückengruppe darstellt und die Bestandteile M ausgewählt sind aus Phosphor, Schwefel, Stickstoff, Arsen, Antimon und C=C, hergestellt wird durch das zur-Reaktion-bringen eines Komplexes aus einem Palladiumdihalogenid und des entsprechenden zweizähnigen Liganden mit einer Zinnverbindung, enthaltend vier durch Zinn verbundene Gruppen, von denen drei identische oder unterschiedliche Kohlenwasserstoffgruppen sind, während die vierte entweder auch eine Kohlenwasserstoffgruppe oder ein Wasserstoff- oder Halogenatom ist.

5. Verfahren wie in Anspruch 4 beansprucht, dadurch gekennzeichnet, daß der zweizähnige Ligand in der Komplexverbindung ein zweizähniger Phosphorligand der allgemeinen Formel R¹R²P-R-PR³R⁴ ist, in welcher R¹, R², R³ und R⁴ identische oder unterschiedliche, gegebenenfalls polarsubstituierte Kohlenwasserstoffgruppen sind und R eine zweiwertige organische Brückengruppe ist, die mindestens zwei Kohlenstoffatome in der Brücke enthält.

6. Verfahren wie in Anspruch 4 beansprucht, dadurch gekennzeichnet, daß der zweizähnige Ligand in dem Komplex aus einem Palladiumdihalogenid und einem zweizähnigen Ligand, der mit der Zinnverbindung zur Reaktion gebracht wird, ein zweizähniger Ligand ist, welcher nicht der allgemeinen Formel R¹R²P-R-PR³R⁴ entspricht, in welcher R¹, R², R³ und R⁴ identische oder verschiedene, gegebenenfalls polarsubstituierte Kohlenwasserstoffgruppen sind und R eine zweiwertige organische Brückengruppe ist, die mindestens zwei Kohlenstoffatome in der Brücke enthält, und daß der erhaltene Komplex aus einem Kohlenwasserstoff-Palladiumhalogenid und einem zweizähnigen Ligand mit einem zweizähnigen Phosphorliganden der allgemeinen Formel R¹R²P-R-PR³R⁴ zur Reaktion gebracht wird.

7. Verfahren zur Herstellung von Polymeren, dadurch gekennzeichnet, daß ein Gemisch von Kohlenmonoxid mit einer oder mehreren olefinisch ungesättigten Verbindung(en) mit einer Katalysatorzusammensetzung, wie sie in einem der Ansprüche 1 bis 3 beansprucht wird und/oder die nach einem Verfahren, wie in Anspruch 5 oder 6 beansprucht, hergestellt wird, in Berührung gebracht wird.

8. Verfahren wie in Anspruch 7 beansprucht, dadurch gekennzeichnet, daß die Monomere mit einer Lösung der Katalysatorzusammensetzung in einem Verdünnungsmittel in Berührung gebracht werden, in welchem die Polymere unlöslich sind, wie z. B. Methanol.

9. Verfahren wie in Anspruch 7 oder 8 beansprucht, dadurch gekennzeichnet, daß es bei einer Temperatur unterhalb 75°C, einem Druck von 2 bis 150 bar und einem molaren Verhältnis der olefinisch ungesättigten Verbindungen zum Kohlenmonoxid in dem zu polymerisierenden Gemisch von 10:1 bis 1:10 durchgeführt wird, und daß pro Mol zu polymerisierender olefinisch ungesättigter Verbindung eine Menge der Katalysatorzusammensetzung verwendet wird, die 10⁻⁷ bis 10⁻³ Mol Palladium enthält.

## Patentansprüche (Patentansprüche für folgende(n) Vertragsstaat(en): ES)

1. Verfahren zur Herstellung einer komplexen Palladiumverbindung, dadurch gekennzeichnet, daß ein Komplex aus einem Kohlenwasserstoff-Palladiumhalogenid und einem zweizähnigen Liganden, welcher die Konfiguration M-R⁵-M einschließt, in welcher R⁵ eine Brückengruppe darstellt und die Bestandteile M ausgewählt sind aus Phosphor, Schwefel, Stickstoff, Arsen, Antimon und C=C, hergestellt wird durch das zur-Reaktion-bringen eines Komplexes aus einem Palladiumdihalogenid und des entsprechenden zweizähnigen Liganden mit einer Zinnverbindung, enthaltend vier durch Zinn verbundene Gruppen, von denen drei identische oder unterschiedliche Kohlenwasserstoffgruppen sind, während die vierte entweder auch eine Kohlenwasserstoffgruppe oder ein Wasserstoff- oder Halogenatom ist.

2. Verfahren wie in Anspruch 1 beansprucht, dadurch gekennzeichnet, daß das Kohlenwasserstoff-Palladiumhalogenid Methylpalladiumchlorid ist.

3. Verfahren wie in Anspruch 1 oder 2 beansprucht, dadurch gekennzeichnet, daß der zweizähnige Ligand in der Komplexverbindung ein zweizähniger Phosphorligand der allgemeinen Formel R¹R²P-R-PR³R⁴ ist, in welcher R¹, R², R³ und R⁴ identische oder unterschiedliche, gegebenenfalls polarsubstituierte Kohlenwasserstoffgruppen sind und R eine zweiwertige organische Brückengruppe ist, die mindestens zwei Kohlenstoffatome in der Brücke enthält.

4. Verfahren wie in Anspruch 1 oder 2 beansprucht, dadurch gekennzeichnet, daß der zweizähnige Ligand in dem Komplex aus einem Palladiumdihalogenid und einem zweizähnigen Ligand, der mit der Zinnverbindung zur Reaktion gebracht wird, ein zweizähniger Ligand ist, welcher nicht der allgemeinen Formel R¹R²P-R-PR³R⁴ entspricht, in welcher R¹, R², R³ und R⁴ identische oder verschiedene, gegebenenfalls polarsubstituierte Kohlenwasserstoffgruppen sind und R eine zweiwertige organische Brückengruppe ist, die mindestens zwei Kohlenstoffatome in der Brücke enthält, und daß der erhaltene Komplex aus einem Kohlenwasserstoff-Palladiumhalogenid und einem zweizähnigen Ligand mit einem zweizähnigen Phosphorliganden der allgemeinen Formel R¹R²P-R-PR³R⁴ zur Reaktion gebracht wird.

5. Verfahren wie in Anspruch 3 oder 4 beansprucht, dadurch gekennzeichnet, daß in dem zweizähnigen Phosphorliganden die Gruppen R¹, R², R³ und R⁴ entweder nicht substituierte Phenylgruppen oder Phenylgruppen sind, die ein oder mehr Alkoxygruppen enthalten, von denen mindestens eine eine ortho-Position in bezug auf das Phosphoratom einnimmt, an welche die Phenylgruppe gebunden ist.

6. Verfahren zur Herstellung von Polymeren, dadurch gekennzeichnet, daß ein Gemisch von Kohlenmonoxid mit einer oder mehreren olefinisch ungesättigten Verbindung(en) mit einer Katalysatorzusammensetzung in Berührung gebracht wird, die gemäß dem Verfahren, wie in einem der Ansprüche 3 bis 5 beansprucht, hergestellt worden ist.

7. Verfahren wie in Anspruch 6 beansprucht, dadurch gekennzeichnet, daß die Monomere mit einer Lösung der Katalysatorzusammensetzung in einem Verdünnungsmittel in Berührung gebracht werden, in welchem die Polymere unlöslich sind, wie z. B. Methanol.

8. Verfahren wie in Anspruch 6 oder 7 beansprucht, dadurch gekennzeichnet, daß es bei einer Temperatur unterhalb 75°C, einem Druck von 2 bis 150 bar und einem molaren Verhältnis der olefinisch ungesättigten Verbindungen zum Kohlenmonoxid in dem zu polymerisierenden Gemisch von 10:1 bis 1:10 durchgeführt wird, und daß pro Mol zu polymerisierender olefinisch ungesättigter Verbindung eine Menge der Katalysatorzusammensetzung verwendet wird, die 10⁻⁷ bis 10⁻³ Mol Palladium enthält.

## Revendications (Revendications pour l'(les) Etat(s) contractant(s) suivant(s): AT, BE, CH, DE, DK, FR, GB, IT, NL, SE)

1. Compositions catalytiques à base d'un complexe d'un composé du palladium et d'un ligand bidenté du phosphore, caractérisé en ce qu'elles sont à base d'un complexe d'un halogénure d'hydrocarbylpalladium et d'un ligand bidenté du phosphore de la formule générale R¹R²P-R-PR³R⁴, dans laquelle R¹, R², R³ et R⁴ sont des groupes hydrocarbyle identiques ou différents portant éventuellement des substituants polaires et R est un groupe organique bivalent formant pont contenant au moins deux atomes de carbone dans le pont.

2. Compositions catalytiques selon la revendication 1, caractérisées en ce que, dans le ligand bidenté du phosphore, les groupes R¹, R², R³ et R⁴ sont soit des groupes phényle non-substitués, soit des groupes phényle contenant un ou plusieurs groupes alcoxy dont au moins un occupe une position ortho par rapport à l'atome de phosphore auquel le groupe phényle est lié.

3. Compositions catalytiques selon la revendication 1 ou 2, caractérisées en ce que l'halogénure d'hydrocarbylpalladium est le chlorure de méthylpalladium.

4. Procédé pour la préparation d'un composé complexe du palladium, caractérisé en ce qu'un complexe d'un halogénure d'hydrocarbylpalladium et d'un ligand bidenté qui comprend la configuration M-R⁵-M où R⁵ représente un groupe formant pont et les portions M sont choisies parmi le phosphore, le soufre, l'azote, l'arsenic, l'antimoine et C=C, est préparé en faisant réagir un complexe d'un dihalogénure de palladium et du ligand bidenté correspondant avec un composé de l'étain contenant quatre groupes liés à l'étain, dont trois sont des groupes hydrocarbyle identiques ou différents, tandis que le quatrième est soit aussi un groupe hydrocarbyle, soit un atome d'hydrogène ou d'un halogène.

5. Procédé selon la revendication 4, caractérisé en ce que le ligand bidenté dans le composé complexe est un ligand bidenté du phosphore de la formule générale R¹R²P-R-PR³R⁴, dans laquelle R¹, R², R³ et R⁴ sont des groupes hydrocarbyle identiques ou différents portant éventuellement des substituants polaires et R est un groupe organique bivalent formant pont contenant au moins deux atomes de carbone dans le pont.

6. Procédé selon la revendication 4, caractérisé en ce que le ligand bidenté dans le complexe dihalogénure de palladium/ligand bidenté qui est mis à réagir avec un composé de l'étain est un ligand bidenté qui ne satisfait pas à la formule générale R¹R²P-R-PR³R⁴, dans laquelle R¹, R², R³ et R⁴ sont des groupes hydrocarbyle identiques ou différents portant éventuellement des substituants polaires et R est un groupe organique bivalent contenant au moins deux atomes de carbone dans le pont, et que le complexe halogénure d'hydrocarbylpalladium/ligand bidenté obtenu est mis à réagir avec un ligand bidenté du phosphore de la formule générale R¹R²P-R-PR³R⁴.

7. Procédé pour la préparation de polymères, caractérisé en ce qu'un mélange d'oxyde de carbone avec un ou plusieurs composés oléfiniquement insaturés est mis en contact avec une composition catalytique telle que revendiquée dans une ou plusieurs des revendications 1-3 et/ou préparée par un procédé tel que revendiqué dans la revendication 5 ou 6.

8. Procédé selon la revendication 7, caractérisé en ce que les monomères sont mis en contact avec une solution de la composition catalytique dans un diluant dans lequel les polymères sont insolubles, comme le méthanol.

9. Procédé selon la revendication 7 ou 8, caractérisé en ce qu'il est mis en oeuvre à une température au-dessous de 75°C, à une pression de 2-150 bars et avec un rapport molaire des composés oléfiniquement insaturés à l'oxyde de carbone dans le mélange à polymériser compris entre 10:1 et 1:10 et que, par mole de composé oléfiniquement insaturé à polymériser, on utilise une quantité de composition catalytique telle qu'elle contienne de 10⁻⁷ à 10⁻³ mole de palladium.

## Revendications (Revendications pour l'(les) Etat(s) contractant(s) suivant(s): ES)

1. Procédé pour la préparation d'un composé complexe du palladium, caractérisé en ce qu'un complexe d'un halogénure d'hydrocarbylpalladium et d'un ligand bidenté qui comprend la configuration M-R⁵-M, où R⁵ représente un groupe formant pont et les portions M sont choisies parmi le phosphore, le soufre, l'azote, l'arsenic l'antimoine et C=C, est préparé en faisant réagir un complexe d'un dihalogénure de palladium et du ligand bidenté correspondant avec un composé de l'étain contenant quatre groupes liés à l'étain, dont trois sont des groupes hydrocarbyle identiques ou différents, tandis que le quatrième est soit aussi un groupe hydrocarbyle, soit un atome d'hydrogène ou d'un halogène.

2. Procédé selon la revendication 1, caractérisé en ce que l'halogénure d'hydrocarbylpalladium est le chlorure de méthylpalladium.

3. Procédé selon la revendication 1, caractérisé en ce que le ligand bidenté dans le composé complexe est un ligand bidenté du phosphore de la formule générale R¹R²P-R-PR³R⁴, dans laquelle R¹, R², R³ et R⁴ sont des groupes hydrocarbyle identiques ou différents portant éventuellement des substituants polaires et R est un groupe organique bivalent formant pont contenant au moins deux atomes de carbone dans le pont.

4. Procédé selon la revendication 1 ou 2, caractérisé en ce que le ligand bidenté dans le complexe dihalogénure de palladium/ligand bidenté qui est mis à réagir avec le composé de l'étain est un complexe bidenté qui ne satisfait pas à la formule générale R¹R²P-R-PR³R⁴, dans laquelle R¹, R², R³ et R⁴ sont des groupes hydrocarbyle identiques ou différents portant éventuellement des substituants polaires et R est un groupe organique bivalent formant pont contenant au moins deux atomes de carbone dans le pont, et que le complexe halogénure d'hydrocarbylpalladium/ligand bidenté obtenu est mis à réagir avec un ligand bidenté du phosphore de la formule générale R¹R²P-R-PR³R⁴.

5. Procédé selon la revendication 3 ou 4, caractérisé en ce que, dans le ligand bidenté du phosphore, les groupes R¹, R², R³ et R⁴ sont soit des groupes phényle non-substitués, soit des groupes phényle contenant un ou plusieurs groupes alcoxy dont au moins un occupe une position ortho par rapport à l'atome de phosphore auquel le groupe phényle est lié.

6. Procédé pour la préparation de polymères, caractérisé en ce qu'un mélange d'oxyde de carbone avec un ou plusieurs composés oléfiniquement insaturés est mis en contact avec une composition catalytique préparée par un procédé tel que revendiqué dans l'une quelconque des revendications 3-5.

7. Procédé selon la revendication 6, caractérisé en ce que les monomères sont mis en contact avec une solution de la composition catalytique dans un diluant dans lequel les polymères sont insolubles, comme le méthanol.

8. Procédé selon la revendication 6 ou 7, caractérisé en ce qu'il est mis en oeuvre à une température au-dessous de 75°C, à une pression de 2-150 bars et avec un rapport molaire des composés oléfiniquement insaturés à l'oxyde de carbone dans le mélange à polymériser compris entre 10:1 et 1:10 et que, par mole de composé oléfiniquement insaturé à polymériser, on utilise une quantité de composition catalytique telle qu'elle contienne de 10⁻⁷ à 10⁻³ mole de palladium.
